# EUROPEAN PATENT SPECIFICATION

(11) **EP 4 456 298 B1**
(45) Date of publication and mention of the grant of the patent: **28.10.2026**
(21) Application number: 22923490.1
(22) Date of filing: 07.12.2022
(51) Int. Cl.: H01M 50/164, H01M 50/15

(54) **BATTERY TOP COVER, TOP COVER ASSEMBLY, BATTERY CELL, BATTERY, AND POWER CONSUMING DEVICE**
BATTERIE OBERDECKEL, OBERDECKEL-BAUGRUPPE, BATTERIEZELLE, BATTERIE UND STROMVERBRAUCHENDE VORRICHTUNG
COUVERCLE SUPÉRIEUR DE BATTERIE, ENSEMBLE DU COUVERCLE SUPÉRIEUR, CELLULE DE BATTERIE, BATTERIE ET DISPOSITIF DE CONSOMMATION D'ÉNERGIE

(30) Priority: 26.01.2022 CN 202220219327 U
(43) Date of publication of application: 30.10.2024
(73) Proprietor: Contemporary Amperex Technology (Hong Kong) Limited, Central, Central And Western District (HK)
(72) Inventor: LIN, Denghua, Ningde, Fujian 352100 (CN); CHEN, Xinxiang, Ningde, Fujian 352100 (CN); CHEN, Long, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2022/137305
(87) International publication number: WO 2023/142700

(56) References cited:
- EP-A1- 3 930 031
- CN-A- 105 711 076
- CN-A- 107 364 144
- CN-A- 112 331 974
- CN-U- 207 044 708
- CN-U- 209 029 425
- CN-U- 209 401 664
- CN-U- 212 970 456
- CN-U- 216 750 197
- US-A1- 2008 078 815

## Description

### CROSS-REFERENCE TO RELATED APPLICATIONS

The present application refers to Chinese Patent Application No. 202220219327.8, filed on January 26, 2022.

### TECHNICAL FIELD

The present application relates to the field of batteries, and in particular to a battery top cover as specified in any of claims 1-8, a top cover assembly as specified in any of claims 9-11, a battery cell as specified in claim 12, a battery as specified in claim 13, and a power consuming device as specified in claim 14.

### BACKGROUND ART

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

In some cases, a battery cell has a top cover assembly, including a top cover and a lower plastic part connected to the top cover. However, the lower plastic part in the related art is prone to detachment from the top cover. Such top cover assembly is disclosed for example in CN209401664U.

### SUMMARY OF THE INVENTION

The present application is intended to solve at least one of the technical problems existing in the prior art. To this end, an objective of the present application is to provide a battery top cover, a top cover assembly, a battery cell, a battery, and a power consuming device, so as to improve the situation where the lower plastic part is prone to detachment from the top cover in the related art.

According to an embodiment in a first aspect of the present application, a battery top cover is provided, including: a cover body; and at least one mounting hole formed on the cover body, where the mounting hole is configured to receive a hot melt of an insulating member, the mounting hole has a bottom wall and a side wall connected to the bottom wall, an end of the side wall away from the bottom wall has an opening, and the bottom wall is provided with a first protrusion protruding toward the opening; wherein a vertical distance between the bottom wall and the opening gradually increases from an inner side of the bottom wall close to the first protrusion to an outer side close to the side wall.

In the technical solution of this embodiment of the present application, the first protrusion is provided in the mounting hole of the battery top cover and on the bottom wall of the mounting hole facing the opening. The first protrusion may be used to contact with the hot melt in the insulating member, so that energy may be concentrated to the first protrusion during an ultrasonic hot melting process, enabling the hot melt to be melted quickly and filled into the mounting hole. As a result, the connection strength between the battery top cover and the insulating member is improved, thus the situation where the two are prone to detachment from each other is improved.

In some embodiments, the first protrusion is spaced apart from the side wall, which may reduce the cross-sectional area of the first protrusion and enable an easier alignment and contact with the hot melt, so that the hot melt may be melted quickly.

This structure allows the hot-melted liquid material to flow along the bottom wall from a vicinity of the first protrusion toward the side wall by means of gravity, that is, to flow from an inner side to an outer side of the bottom wall. Therefore, the liquid material may be more easily filled to a connection position between the bottom wall and the side wall, contributing to the filling of the liquid material to the entire mounting hole.

In some embodiments, the side wall is further provided with a second protrusion, and a recessed portion is provided between the second protrusion and the bottom wall. The recessed portion may achieve an engagement between the hot melt and the mounting hole, which further improves the connection strength between the battery top cover and the insulating member.

In some embodiments, the second protrusion extends along a circumferential direction of the mounting hole to form an annular structure. The annular structure is simple in structure and easy to process, and may increase the contact area between the mounting hole and the cooled hot melt, thereby further improving the connection strength between the battery top cover and the insulating member.

In some embodiments, a plurality of second protrusions are provided, the plurality of second protrusions are arranged at intervals along a circumferential direction of the mounting hole, which may increase the contact area between the mounting hole and the cooled hot melt, and further improves the connection strength between the battery top cover and the insulating member.

In some embodiments, the side wall includes a first wall surface and a second wall surface connected in sequence along an axial direction of the mounting hole, the bottom wall is connected to an end of the first wall surface away from the second wall surface, and a portion of the second wall surface protruding inwards from the first wall surface forms the second protrusion. By providing the first wall surface and the second wall surface, the contact area between the mounting hole and the cooled hot melt is increased, and the connection strength between the battery top cover and the insulating member is further improved.

In some embodiments, the side wall further includes a third wall surface connected between the first wall surface and the second wall surface, and taking a plane parallel to the cover body as a cross-section, a cross-sectional area of an area enclosed by the third wall surface gradually increases from an end close to the second wall surface to an end away from the second wall surface. The third wall surface may contribute to the processing of the mounting hole.

In some embodiments, the second wall surface is a cylindrical surface, which may reduce stress concentration and contribute to improving the mechanical properties of the top cover assembly.

In some embodiments, the side wall further includes a fourth wall surface connected to an end of the second wall surface away from the first wall surface, and the second wall surface further protrudes inwards from the fourth wall surface. Since a cross-sectional area of the fourth wall surface is relatively large, it is easier for the hot melt to be inserted into the mounting hole.

In some embodiments, a plurality of first protrusions are provided, the plurality of first protrusions being arranged at intervals on the bottom wall. By providing the plurality of first protrusions, not only may a plurality of contact positions be formed between the plurality of first protrusions and the hot melt, but also a plurality of energy concentrating points may be formed, thereby accelerating the melting speed of the hot melt.

According to an embodiment in a second aspect of the present application, a top cover assembly is provided, including: an insulating member, including a main body and at least one hot melt provided on the main body; and a battery top cover as described above, where each hot melt is inserted into one mounting hole of the battery top cover, and the hot melt is configured to be filled into the mounting hole after hot melting

According to the technical solution of this embodiment of the present application, the first protrusion is provided in the mounting hole of the battery top cover and on the bottom wall of the mounting hole facing the opening. The first protrusion may be used to contact with the hot melt in the insulating member, so that energy may be concentrated to the first protrusion during an ultrasonic hot melting process, enabling the hot melt to be melted quickly and filled into the mounting hole. As a result, the connection strength between the battery top cover and the insulating member is improved, thus the situation where the two are prone to detachment from each other is improved.

In some embodiments, a contact portion is provided at an end of the hot melt away from the main body, and taking a plane parallel to the main body as a cross-section, a cross-sectional area of the contact portion gradually decreases from an end close to the main body to an end away from the main body to form a tip. The tip may reduce the contact area with the first protrusion, thereby further contributing to the concentration of ultrasonic energy at the tip, so that the hot melt may be melted more quickly.

In some embodiments, the hot melt includes a first section and a second section connected in sequence along a direction away from the main body, a cross-sectional area of the first section is greater than a cross-sectional area of the second section, and the contact portion is arranged at an end of the second section away from the first section, so that the hot melt is divided into sections with unequal cross-sectional areas, and it is easier for the hot melt to be inserted into the mounting hole.

According to an embodiment in a third aspect of the present application, a battery cell is provided, including: a top cover assembly as described above.

According to an embodiment in a fourth aspect of the present application, a battery is provided, including a battery cell in the above embodiments.

According to an embodiment in a fifth aspect of the present application, a power consuming device is provided, including a battery in the above embodiments configured to supply electric energy.

The above description is only an overview of the technical solutions of the present application. To more clearly understand the technical means of the present application to implement same according to the contents of the description, and to make the above and other objectives, features, and advantages of the present application more obvious and understandable, specific implementations of the present application are exemplarily described below.

### BRIEF DESCRIPTION OF THE DRAWINGS

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without involving any inventive effort. In the drawings, the same reference signs denote the same or similar components or elements throughout multiple drawings, unless otherwise specified. The drawings are not necessarily drawn to scale. It should be understood that these drawings depict only some implementations according to the present application and should not be construed as limiting the scope of the present application.
FIG. 1 is a schematic structural diagram of a vehicle according to some embodiments of the present application;
FIG. 2 is a schematic exploded structural diagram of a battery according to some embodiments of the present application;
FIG. 3 is a schematic exploded structural diagram of a battery cell according to some embodiments of the present application;
FIG. 4 is a schematic structural diagram of a battery top cover according to some embodiments of the present application;
FIG. 5 is a schematic partial enlarged diagram of part A in FIG. 4;
FIG. 6 is a front view of a battery top cover according to some embodiments of the present application;
FIG. 7 is a schematic sectional view taken along line B-B in FIG. 6;
FIG. 8 is a schematic partial enlarged diagram of part C in FIG. 7;
FIG. 9 is a schematic structural diagram of an insulating member according to some embodiments of the present application;
FIG. 10 is a schematic partial enlarged diagram of part D in FIG. 9; and
FIG. 11 is a side view of a hot melt in FIG. 9.

Description of reference signs:
vehicle 1000;
battery 100, controller 200, motor 300;
case 10, first portion 110, second portion 120;
battery cell 20, top cover assembly 20a, battery top cover 210, cover body 211, mounting hole 212, bottom wall 213, side wall 214, first wall surface 2141, second wall surface 2142, third wall surface 2143, fourth wall surface 2144, opening 215, first protrusion 216, second protrusion 217, recessed portion 218, insulating member 220, hot melt 221, first section 2211, second section 2212, contact portion 2213, main body 222, electrode terminal 230, housing 20b, cell assembly 20c, and tab 240.

### DETAILED DESCRIPTION OF EMBODIMENTS

Embodiments of the technical solutions of the present application will be described in detail below with reference to the accompanying drawings.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

In the related art, a battery may include a plurality of battery cells, each of which generally has a top cover assembly. The top cover assembly includes a top cover and a lower plastic part connected to the top cover. The lower plastic part is generally made of an insulating material, a mounting hole is formed on the top cover, and a connecting column is provided on the lower plastic part. During installation, the connecting column may be inserted into a respective mounting hole, and then an ultrasonic hot melting process is used to melt the connecting column and fill same into the mounting hole, so that the cooled re-formed connecting column may be bonded to the mounting hole, thereby installing the lower plastic part onto the top cover.

However, the applicant notices that in the related art, the problem of incomplete melting of the connecting column causes that the entire mounting hole fails to be fully filled with the melted connecting column, resulting in insufficient bonding between the cooled connecting column and the mounting hole, thus the lower plastic part is prone to detachment from the top cover.

In response to the above problems, the embodiments of the present application provide a battery top cover, a top cover assembly, a battery cell, a battery, and a power consuming device. A first protrusion is provided in the mounting hole of the battery top cover and on the bottom wall of the mounting hole facing the opening. The first protrusion may be configured to contact with the hot melt in the insulating member, so that energy may be concentrated to the first protrusion during an ultrasonic hot melting process, enabling the hot melt to be melted quickly to fill the mounting hole. As a result, the connection strength between the battery top cover and the insulating member is improved, thus the situation where the two are prone to detachment from each other is improved. The present application will be described in detail below with reference to the specific embodiments.

The embodiments of the present application provide a power consuming device with a battery as a power supply. The power consuming device may include, but is not limited to, a mobile phone, a tablet, a notebook computer, an electric toy, an electric tool, an electromobile, an electric vehicle, a ship, or a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

For ease of description of the following embodiments, an example in which a power consuming device according to an embodiment of the present application is a vehicle 1000 is taken for description.

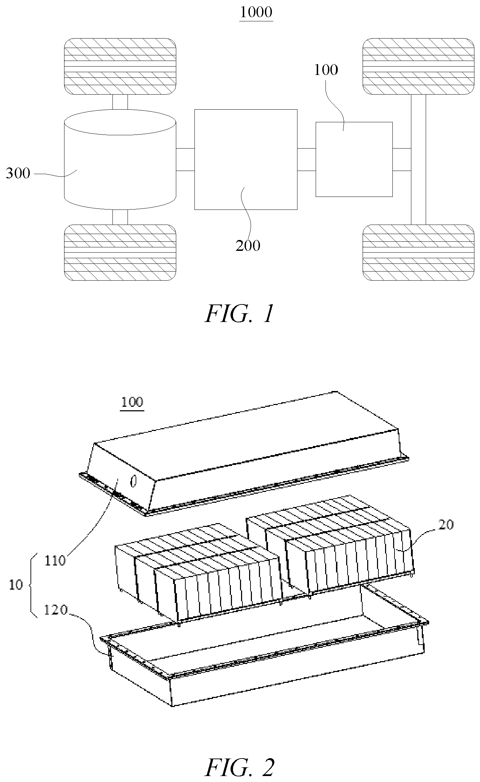

FIG. 1 is a schematic structural diagram of a vehicle 1000 according to some embodiments of the present application. Referring to FIG. 1, the vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be arranged at a bottom, a head or a tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of the present application, the battery 100 may not only serve as a power supply for operating the vehicle 1000, but also serve as a power supply for driving the vehicle 1000, in place of or partially in place of fuel or natural gas, to supply driving power to the vehicle 1000.

FIG. 2 is an exploded view of a battery 100 according to some embodiments of the present application. Referring to FIG. 2, the battery 100 includes a case 10 and battery cells 20. The battery cells 20 are received in the case 10. The case 10 is configured to provide a receiving space for the battery cells 20, and the case 10 may be of various structures. In some embodiments, the case 10 may include a first portion 110 and a second portion 120, the first portion 110 and the second portion 120 being fitted to each other in a covering manner, and the first portion 110 and the second portion 120 jointly defining the receiving space for receiving the battery cells 20. The second portion 120 may be of a hollow structure with one end having a first opening, the first portion 110 may be of a plate-like structure, and the first portion 110 covers a first opening side of the second portion 120, such that the first portion 110 and the second portion 120 jointly define the receiving space. The first portion 110 and the second portion 120 each may also be of a hollow structure with one side having a second opening, and a second opening side of the first portion 110 covers a second opening side of the second portion 120. Of course, the case 10 formed by the first portion 110 and the second portion 120 may be in various shapes such as a cylinder and a cuboid.

In the battery 100, a plurality of battery cells 20 may be provided, and the plurality of battery cells 20 may be in series connection, in parallel connection or in series-parallel connection. The series-parallel connection means that some of the plurality of battery cells 20 are in series connection and some are in parallel connection. The plurality of battery cells 20 may be directly connected together in series, in parallel or in series-parallel, and then a unit consisting of the plurality of battery cells 20 is received in the case 10. Of course, the battery 100 may also be formed in such a way that a plurality of battery cells 20 are firstly connected in series, in parallel or in series-parallel to form a battery module, and then a plurality of battery modules are connected in series, in parallel or in series-parallel to form a unit and are received in the case 10. The battery 100 may further include other structures. For example, the battery 100 may further include a busbar component configured to achieve electrical connection between the plurality of battery cells 20.

The battery cell 20 may be a secondary battery or a primary battery, or may be a lithium-sulfur battery, a sodium-ion battery, or a magnesium-ion battery, but not limited to thereto. The battery cell 20 may be cylindrical, flat, rectangular, or in other shapes.

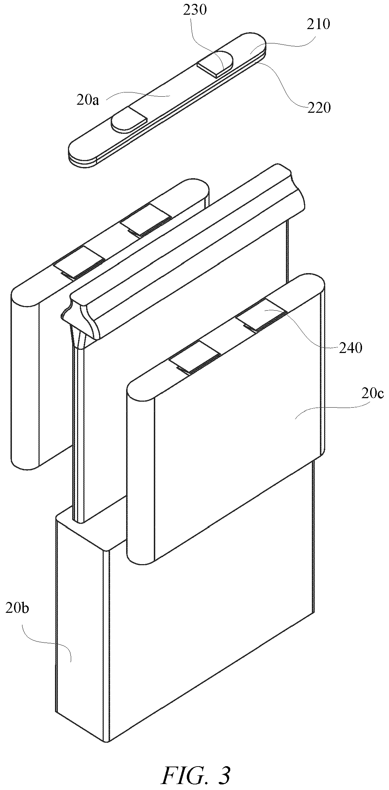

FIG. 3 is a schematic exploded structural diagram of a battery cell 20 according to some embodiments of the present application. Referring to FIG. 3, the battery cell 20 refers to a minimum unit that constitutes a battery. As shown in FIG. 3, the battery cell 20 includes a top cover assembly 20a, a housing 20b, a cell assembly 20c, and other functional components.

The top cover assembly 20a refers to a component that is fitted to an opening of the housing 20b in a covering manner to isolate an internal environment of the battery cell 20 from an external environment. Without limitation, the top cover assembly 20a may be shaped to adapt to the shape of the housing 20b to match the housing 20b. In some embodiments, the top cover assembly 20a may be made of a material (for example, an aluminum alloy) with a certain hardness and strength. In this way, the top cover assembly 20a is less prone to deformation when subjected to compression and collision, so that the battery cell 20 may have a higher structural strength and the safety performance may also be improved. Functional components, such as an electrode terminal 230, may be provided on the top cover assembly 20a. The electrode terminals 230 may be used for electrical connection to the cell assembly 20c for outputting or inputting electric energy of the battery cell 20. In some embodiments, the top cover assembly 20a may be further provided with a pressure relief mechanism configured to release an internal pressure when the internal pressure or temperature of the battery cell 20 reaches a threshold. The top cover assembly 20a may also be made of various materials, such as copper, iron, aluminum, stainless steel, an aluminum alloy, plastic, etc., which will not be specially limited in the embodiments of the present application.

In some embodiments, the top cover assembly 20a may further include: a battery top cover 210 and an insulating member 220 provided on a side of the battery top cover 210, where the battery top cover 210 is generally made of metal, such as copper, iron, aluminum, stainless steel, etc. The insulating member 220 may be used to isolate the battery top cover 210 from conductive components such as the electrode terminal 230 or the tab 240, so as to reduce the risk of a short circuit. For example, the insulating member 220 may be made of plastic, rubber, etc. It may be understood that in FIG. 3, the insulating member 220 is provided at the bottom of the battery top cover 210 close to the cell assembly 20c, and the shape and size thereof are substantially the same as that of the battery top cover 210. However, in other embodiments, the insulating member 220 may be provided at the top of the battery top cover 210, and the shape and size thereof are not limited to the shape and size shown in the figure.

The housing 20b is an assembly configured to cooperate with the top cover assembly 20a to form the internal environment of the battery cell 20, where the formed internal environment may be used to receive the cell assembly 20c, an electrolyte, and other components. The housing 20b and the top cover assembly 20a may be separate components, the housing 20b may be provided with the opening, and the internal environment of the battery cell 20 is formed by covering the opening with the top cover assembly 20a at the opening. Without limitation, the top cover assembly 20a and the housing 20b may also be integrated with each other. Specifically, the top cover assembly 20a and the housing 20b may form a common connection face before other components are placed into the housing. When the interior of the housing 20b needs to be encapsulated, the top cover assembly 20a then covers the housing 20b. The housing 20b may have various shapes and various dimensions, for example, it may be in the shape of a cuboid, a cylinder, a hexagonal prism, etc. Specifically, the shape of the housing 20b may be determined according to the specific shape and dimensions of the cell assembly 20c. Materials of the housing 20b may be various, such as copper, iron, aluminum, stainless steel, aluminum alloy and plastic, which is not specially limited in the embodiments of the present application.

The cell assembly 20c is a component in the battery cell 20 where an electrochemical reaction takes place. The housing 20b may contain one or more cell assemblies 20c. The cell assembly 20c is mainly formed by winding or stacking a positive electrode plate and a negative electrode plate, and is usually provided with a separator between the positive electrode plate and the negative electrode plate. Portions of the positive electrode plate and the negative electrode plate that each have an active material form a main body portion of the cell assembly 20c, and portions of the positive electrode plate and the negative electrode plate that each have no active material form a tab 240. A positive electrode tab and a negative electrode tab may be both located at one end of the main body portion or respectively located at two ends of the main body portion. During the charging and discharging of the battery, a positive electrode active material and a negative electrode active material react with the electrolyte, and the tabs 240 are connected to the electrode terminals 230 to form a current loop.

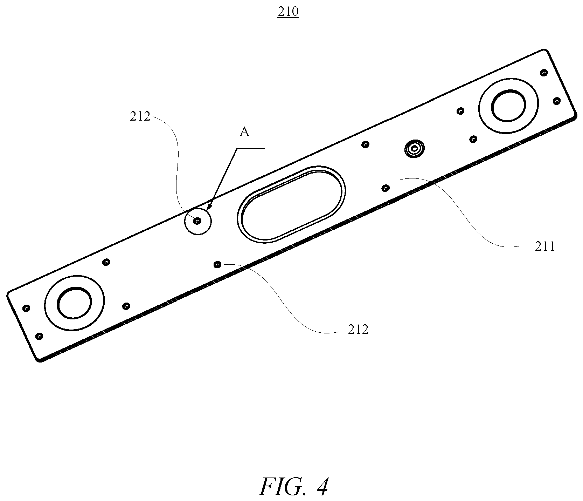

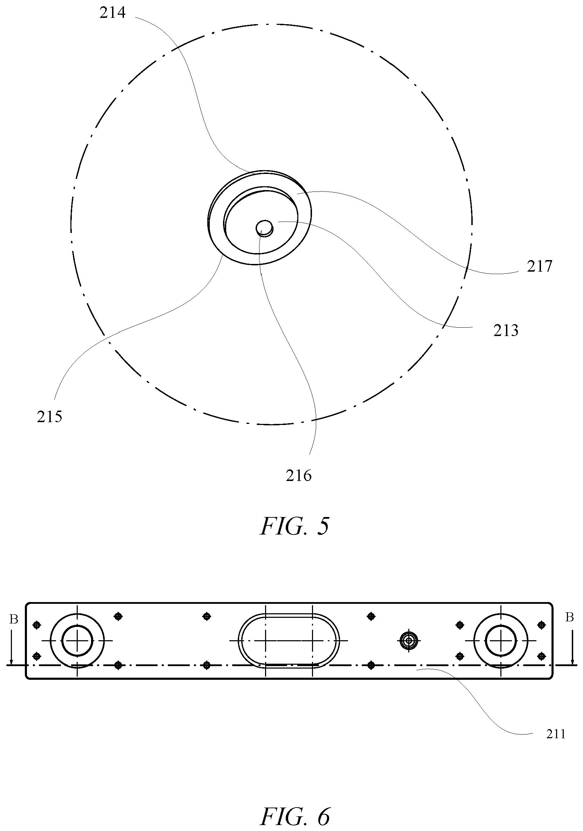

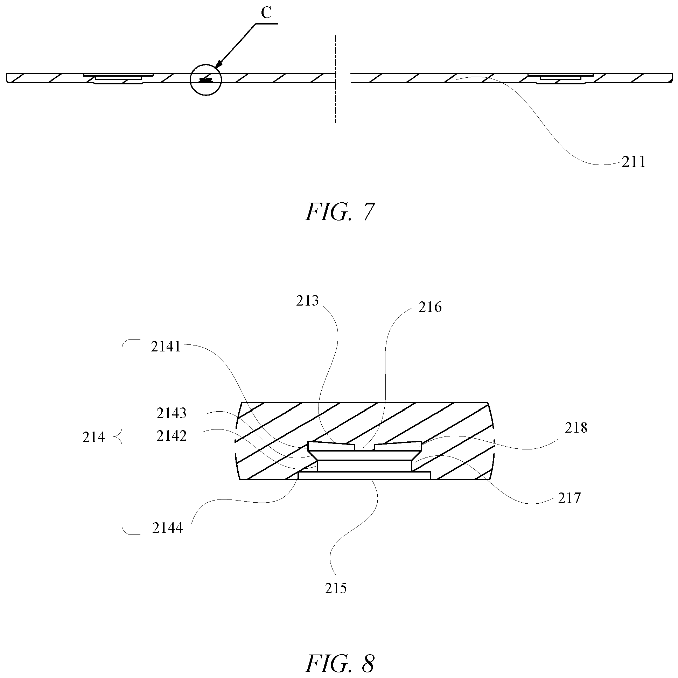

FIG. 4 is a schematic structural diagram of a battery top cover according to some embodiments of the present application; FIG. 5 is a schematic partial enlarged diagram of part A in FIG. 4; FIG. 6 is a front view of a battery top cover according to some embodiments of the present application; FIG. 7 is a schematic sectional view taken along line B-B in FIG. 6; and FIG. 8 is a schematic partial enlarged diagram of part C in FIG. 7.

Referring to FIGS. 4 to 8, the embodiments of the present application provide a battery top cover 210, including: a cover body 211, which may be substantially of a plate-like structure with a relatively small thickness, and may be made of a metal material such as copper, iron, aluminum or stainless steel; and at least one mounting hole 212 formed on the cover body 211, where the mounting hole 212 is configured to receive the hot melt 221 of the insulating member 220 and has a bottom wall 213 and a side wall 214 connected to the bottom wall 213, an end of the side wall 214 away from the bottom wall 213 has an opening 215, and the bottom wall 213 is provided with a first protrusion 216 protruding toward the opening 215.

The mounting hole 212 may be formed on the cover body 211. The mounting hole 212 may be of a blind hole structure and provided on a side of the cover body 211 facing the insulating member 220 to facilitate its connection with the insulating member 220.

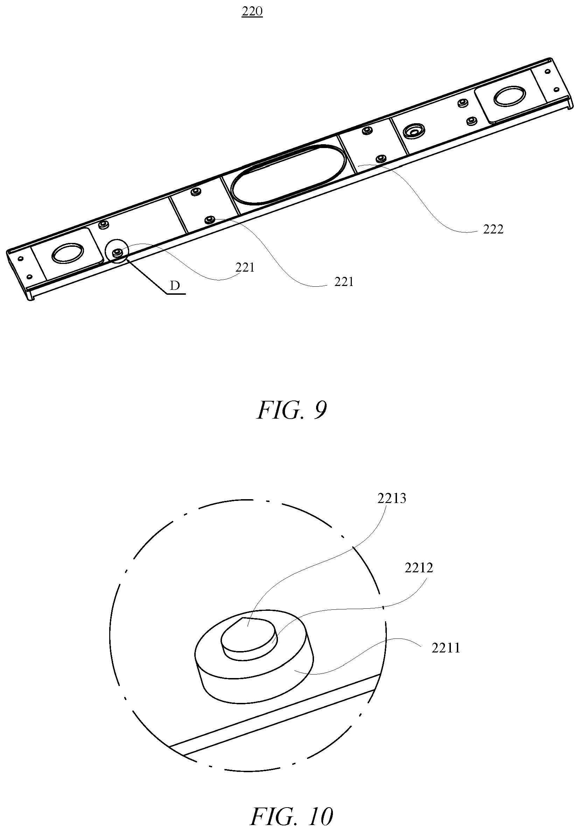

FIG. 9 is a schematic structural diagram of an insulating member according to some embodiments of the present application. In conjunction with FIG. 9, it will be understood that the insulating member 220 may be provided with hot melts 221, the number of which corresponds to the number of mounting holes 212, and each hot melt 221 is correspondingly received in one mounting hole 212. The hot melt 221 may be made of an insulating material such as a thermoplastic, and may be melted into a flowable liquid material after an ultrasonic hot melting process is performed. The liquid material can be filled into the mounting hole 212 and re-formed into the hot melt 221 in a solid state after the liquid material is cooled, so as to achieve a fixed connection of the battery top cover 210 and the insulating member 220 through an adhesive force between the hot melt 221 and the mounting hole 212.

The mounting hole 212 may have various shapes. The cross-section of the mounting hole 212 may be in various shapes such as a circle, a square, and a triangle, with a plane parallel to the cover body 211 taken as the cross-section. One or more mounting holes 212 may be provided. If a plurality of mounting holes 212 are provided, the plurality of mounting holes 212 may be arranged in an array on the cover body 211, so as to increase the connection strength between the cover body 211 and the insulating member 220.

The opening 215 may be provided at an end of the mounting hole 212 facing the insulating member 220, and the hot melt 221 may be placed in the mounting hole 212 through the opening 215.

The mounting hole 212 has the bottom wall 213 and the side wall 214 connected to the bottom wall 213. The bottom wall 213 may be a portion of a hole wall of the mounting hole 212 corresponding to the opening 215, that is, under an installed state, the bottom wall 213 is at an end away from the insulating member 220, and the opening 215 is at an end close to the insulating member 220. The side wall 214 may be a portion of the hole wall between the bottom wall 213 and the opening 215. The bottom wall 213 and the side wall 214 may have various shapes, which may be selected according to actual conditions.

The first protrusion 216 is provided on the bottom wall 213, and may protrude from the bottom wall 213 toward the opening 215. The first protrusion 216 may have various shapes, such as a cylinder, a cone, or a prism. In some embodiments, the cross-sectional area of the first protrusion 216 may be smaller than the maximum cross-sectional area of the bottom wall 213. The first protrusion 216 may also have various height dimensions along the axial direction of the mounting hole 212. For example, the height dimension of the first protrusion 216 may be less than or equal to the depth of the mounting hole 212 along the axial direction thereof, so that the first protrusion 216 may be entirely disposed inside the mounting hole 212.

During the installation of the battery top cover 210 and the insulating member 220, the battery top cover 210 may be placed horizontally so that the opening 215 of the mounting hole 212 faces upwards, and then the insulating member 220 is turned upside down onto the battery top cover 210 so that the hot melt 221 may be inserted into the corresponding mounting hole 212. Since the first protrusion 216 protrudes from the bottom wall 213, an end of the hot melt 221 may abut against the first protrusion 216. Then, when the ultrasonic hot melting process is performed to melt the hot melt 221, the first protrusion 216 may be used to concentrate ultrasonic energy, so that it is easier for heat to be concentrated near the first protrusion 216, that is, the hot melt 221 in contact with the first protrusion 216 may be quickly melted at a contact position, thereby improving the speed of melting of the hot melt 221.

It will be understood that the ultrasonic hot melting process is usually implemented through ultrasonic welding equipment. The welding time for each welding point (i.e., the hot melt) is preset. The energy may be concentrated through the first protrusion 216 so that the hot melt 221 may be melted quickly. Within the same time, the hot melt 221 is melted more completely, so that the molten liquid material is more easily filled into the entire mounting hole 212, thereby increasing the contact area between the mounting hole 212 and the cooled hot melt 221 and improving the connection strength between the battery top cover 210 and the insulating member 220, so that the two are less likely to detach from each other. Furthermore, the first protrusion 216 protruding from the bottom wall 213 may also increase the contact area, which may further improve the connection strength between the battery top cover 210 and the insulating member 220.

**In** some embodiments, the first protrusion 216 is spaced apart from the side wall 214.

It will be understood that the first protrusion 216 does not necessarily contact with the side wall 214, that is, the orthographic projection of the first protrusion 216 on the bottom wall 213 may fall within the bottom wall 213. According to a specific implementation, the mounting hole 212 may pass through the geometric center of the bottom wall 213.

The first protrusion 216 is spaced apart from the side wall 214, so that the cross-sectional area of the first protrusion 216 may be reduced. In addition, it is easier for the first protrusion 216 to be aligned and contact with the hot melt 211, so that the hot melt 211 may be melted quickly.

In some embodiments, a vertical distance between the bottom wall 213 and the opening 215 gradually increases from an inner side of the bottom wall 213 close to the first protrusion 216 to an outer side close to the side wall 214.

It will be understood that the bottom wall 213 surrounds the periphery of the first protrusion 216, and the inner side of the bottom wall 213 close to the first protrusion 216 is at a small distance from the opening 215, while the outer side of the bottom wall 213 close to the side wall 214 is at a large distance from the opening 215. That is, the bottom wall 213 may be inclined so that the mounting hole 212 is substantially shallow in the middle and deep at the edge. In some embodiments, the bottom wall 213 may be a truncated cone surface.

This structure allows the hot-melted liquid material to flow along the bottom wall 213 from a vicinity of the first protrusion 216 toward the side wall 214 by means of gravity, that is, to flow from the inner side to the outer side of the bottom wall 213. Therefore, the liquid material may be more easily filled to a connection position between the bottom wall 213 and the side wall 214, contributing to the filling of the liquid material to the entire mounting hole 212. Furthermore, the contact area between the mounting hole 212 and the cooled hot melt 221 may be increased, thus the connection strength between the battery top cover 210 and the insulating member 220 may be further improved.

In some other embodiments, a plurality of first protrusions 216 are provided, and the plurality of first protrusions 216 are arranged at intervals on the bottom wall 213.

Two, three, four or more first protrusions 216 may be provided. In some embodiments, the plurality of first protrusions 216 may be arranged in various ways on the bottom wall 213. For example, the plurality of first protrusions 216 may be arranged at equal intervals on the bottom wall 213, or the plurality of first protrusions 216 may be arranged at unequal intervals. In some embodiments, the plurality of first protrusions 216 may also be arranged in an array on the bottom wall 213.

By providing the plurality of first protrusions 216, not only may a plurality of contact positions be formed between the plurality of first protrusions 216 and the hot melt 221, but also the ultrasonic energy may be concentrated at the plurality of positions so as to form a plurality of energy concentrating points, thereby accelerating the melting speed of the hot melt 221.

Referring to FIG. 8, in some embodiments, the side wall 214 is further provided with a second protrusion 217, and a recessed portion 218 is provided between the second protrusion 217 and the bottom wall 213.

The second protrusion 217 may be provided on the side wall 214 and may be spaced apart from the bottom wall 213 by a certain dimension, so that the recessed portion 218 recessed with respect to the second protrusion 217 may be formed between the bottom wall 213 and the second protrusion 217.

After the liquid material is cooled, it may be bonded tightly with both the side wall 214 and the bottom wall 213, so that the cooled hot melt 221 may have a portion fitting with the shape of the recessed portion 218. This portion can achieve an engagement between the hot melt 221 and the mounting hole 212, and may also increase the contact area between the mounting hole 212 and the cooled hot melt 221, which further improves the connection strength between the battery top cover 210 and the insulating member 220.

The second protrusion 217 may have various structures. In some embodiments, the second protrusion 217 extends along the circumferential direction of the mounting hole 212 to form an annular structure.

It will be understood that the second protrusion 217 may extend along the circumferential direction of the mounting hole 212 to form a closed annular structure. Taking a section passing through the axis of the mounting hole 212 as a longitudinal-section, the longitudinal-section of the annular structure may be in various shapes, such as a rectangle, a triangle, a semicircle, etc.

The annular structure is simple in structure and easy to process, and may increase the contact area between the mounting hole 212 and the cooled hot melt 221, thereby further improving the connection strength between the battery top cover 210 and the insulating member 220.

In some other embodiments, a plurality of second protrusions 217 are provided. The plurality of second protrusions 217 are arranged at intervals along the circumferential direction of the mounting hole 212.

It will be understood that a plurality of second protrusions 217 may be provided, for example, two, three, four, etc. The plurality of second protrusions 217 may be arranged at intervals along the circumferential direction of the mounting hole 212, for example, at equal intervals, or at unequal intervals. Each second protrusion 217 may also have a longitudinal-section in various shapes, such as a rectangle, a triangle, a semicircle, etc. In some embodiments, the shape of the longitudinal-section of each second protrusion 217 may be the same or different.

The plurality of second protrusions 217 may increase the contact area between the mounting hole 212 and the cooled hot melt 221, which further improves the connection strength between the battery top cover 210 and the insulating member 220.

As shown in FIG. 8, in some embodiments, the side wall 214 includes a first wall surface 2141 and a second wall surface 2142 connected in sequence along the axial direction of the mounting hole 212, the bottom wall 213 is connected to an end of the first wall surface 2141 away from the second wall surface 2142, and a portion of the second wall surface 2142 protruding inwards from the first wall surface 2141 forms the second protrusion 217.

It will be understood that along the axial direction of the mounting hole 212, the first wall surface 2141 may have one end connected to the bottom wall 213 and the other end connected to the second wall surface 2142. In some embodiments, "connected" may be understood in a broad sense, that is, the second wall surface 2142 may be directly connected to the first wall surface 2141, or in another example, the second wall surface 2142 may be connected to the first wall surface 2141 through other surfaces.

The second wall surface 2142 protrudes inwards from the first wall surface 2141, that is, the second wall surface 2142 protrudes from the first wall surface 2141 in a direction facing the axis of the mounting hole 212, and the cross-sectional area of the area enclosed by the first wall surface 2141 is greater than the cross-sectional area of the area enclosed by the second wall surface 2142, so that the portion of the second wall surface 2142 protruding from the first wall surface 2141 forms the second protrusion 217. In contrast, the first wall surface 2141 may be used to form the recessed portion 218.

By providing the first wall surface 2141 and the second wall surface 2142, the contact area between the mounting hole 212 and the cooled hot melt 221 may be increased, and the volume of the liquid material, which is formed after the hot melt 221 is melted, flowing into the entire mounting hole 212 may be increased, thereby further improving the connection strength between the battery top cover 210 and the insulating member 220.

With continued reference to FIG. 8, in some embodiments, the side wall 214 further includes a third wall surface 2143 connected between the first wall surface 2141 and the second wall surface 2142. Taking a plane parallel to the cover body 211 as a cross-section, the cross-sectional area of the area enclosed by the third wall surface 2143 gradually increases from an end close to the second wall surface 2142 to an end away from the second wall surface 2142.

The third wall surface 2143 may be connected between the first wall surface 2141 and the second wall surface 2142 to serve as a transition between the first wall surface 2141 and the second wall surface 2142. It will be understood that the increasing trend of the cross-sectional area of the area enclosed by the third wall surface 2143 may be linear, parabolic, hyperbolic, exponential, or in other forms.

The third wall surface 2143 may contribute to the processing of the mounting hole 212.

In some embodiments, the second wall surface 2142 is a cylindrical surface.

The cylindrical surface is relatively flat, which may avoid forming a sharp corner, thereby reducing stress concentration and contributing to an improvement of the mechanical properties of the top cover assembly 20a.

In some embodiments, the side wall 214 further includes a fourth wall surface 2144 connected to an end of the second wall surface 2142 away from the first wall surface 2141, and the second wall surface 2142 also protrudes inwards from the fourth wall surface 2144.

The fourth wall surface 2144 may be provided at the outermost side of the mounting hole 212, and the opening 215 may be provided at an end of the fourth wall surface 2144 away from the bottom wall 213. The second wall surface 2142 may protrude from the fourth wall surface 2144 in the direction facing the axis of the mounting hole 212, that is, the cross-sectional area of the area enclosed by the fourth wall surface 2144 is greater than the cross-sectional area of the area enclosed by the second wall surface 2142.

Since the cross-sectional area of the area enclosed by the fourth wall surface 2144 is relatively large, it is easier for the hot melt 221 to be inserted into the mounting hole 212.

An embodiment of the present application further provides a top cover assembly 20a, including: the insulating member 220 and the battery top cover 210, where the insulating member 220 includes a main body 222 and at least one hot melt 221 provided on the main body 222, each hot melt 221 is inserted into one mounting hole 212 of the battery top cover 210, and the hot melt 221 is configured to be filled into the mounting hole 212 after hot melting.

The insulating member 220 may be made of an insulating material such as thermoplastic and rubber. Taking the side of the battery top cover 210 close to the cell assembly 20c as a lower side, the insulating member 220 may be provided at a lower side of the battery top cover 210 to isolate the battery top cover 210 from the cell assembly 20c. Alternatively, the insulating member 220 may also be provided at an upper side of the battery top cover 210 relative to the lower side to isolate the battery top cover 210 from the electrode terminal 230.

The main body 222 may be the main structure of the insulating member 220, and may also have a substantially plate-like shape. When the battery top cover 210 is fixedly connected to the insulating member 220, the main body 222 may be substantially parallel to the cover body 211. In some embodiments, the dimensions of the main body 222 may also be set according to actual conditions. For example, when the insulating member 220 is provided at the lower side of the battery top cover 210, the dimensions thereof may be substantially close to the dimensions of the main body 222, so as to achieve a good insulation effect. For another example, when the insulating member 220 is provided at the upper side of the battery top cover 210, the dimensions thereof may be relatively small and may be specifically set according to actual conditions.

The hot melt 221 may have a columnar structure, a block-like structure, or the like. The hot melt 221 can be inserted into the mounting hole 212. It will be understood that the cross-sectional area of the hot melt 221 before hot melting may be relatively small, for example, smaller than the minimum cross-sectional area of the mounting hole 212, so that the hot melt 221 may be easily inserted into the mounting hole 212. In addition, the volume of the hot melt 221 may be approximately equal to that of the mounting hole 212, so as to facilitate the filling of the liquid material into the mounting hole 212 after the hot melting.

The structure and function of the battery top cover 210 are the same as those in the embodiments described above, and specific details may be referred to the embodiments described above, which will not be repeated here.

According to the top cover assembly 20a provided in the present embodiments, the first protrusion 216 is provided in the mounting hole 212 of the battery top cover and on the bottom wall 213 of the mounting hole 212 facing the opening 215. The first protrusion 216 may be configured to contact with the hot melt 221 in the insulating member 220, so that energy may be concentrated to the first protrusion 216 during the ultrasonic hot melting process, enabling the hot melt 221 to be melted quickly and filled into the mounting hole 212. As a result, the connection strength between the battery top cover 210 and the insulating member 220 is improved, thus the situation where the two are prone to detachment from each other is improved.

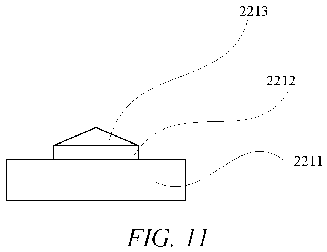

FIG. 10 is a schematic partial enlarged diagram of part D in FIG. 9. FIG. 11 is a side view of a hot melt in FIG. 9. It will be understood that FIGS. 10 and 11 show a relevant structure before the hot melt 221 is melted. Referring to FIGS. 10 and 11, in some embodiments, a contact portion 2213 is provided at an end of the hot melt 221 away from the main body 222. With a plane parallel to the main body 222 as a cross-section, the cross-sectional area of the contact portion 2213 gradually decreases from an end close to the main body 222 to an end away from the main body 222 to form a tip.

The contact portion 2213 may be provided at the end of the hot melt 221 away from the main body 222, and the cross-sectional area thereof may gradually decrease from the end close to the main body 222 to the end away from the main body 222 to form the tip, which may be configured to contact with the first protrusion 216. The decreasing trend of the cross-sectional area of the contact portion 2213 may be linear, parabolic, hyperbolic, exponential, or in other forms.

The tip may reduce the contact area with the first protrusion 216, thereby further contributing to the concentration of the ultrasonic energy at the tip, so that the hot melt 221 may be melted more quickly.

In some embodiments, the hot melt 221 includes a first section 2211 and a second section 2212 connected in sequence along a direction away from the main body 222, the cross-sectional area of the first section 2211 is greater than the cross-sectional area of the second section 2212, and the contact portion 2213 is provided at an end of the second section 2212 away from the first section 2211.

It will be understood that the first section 2211, the second section 2212 and the contact portion 2213 may be connected in sequence along the direction away from the main body 222. The cross-sectional shapes of the first section 2211 and the second section 2212 may be a circle, a square, etc., which is not specifically limited in the present application.

In this embodiment, the cross-sectional area of the first section 2211 may be greater than the cross-sectional area of the second section 2212, so that the hot melt 221 is divided into sections with unequal cross-sectional areas, and it is easier for the hot melt 221 to be inserted into the mounting hole 212.

In some other embodiments, the cross-sectional shapes and cross-sectional areas of the first section 2211 and the second section 2212 may be the same, that is, a portion of the hot melt 221 other than the contact portion 2213 may be a structure with a uniform cross-section.

According to some embodiments of the present application, a battery cell 20 is further provided, including the top cover assembly 20a described in any one of the foregoing embodiments.

According to some embodiments of the present application, a battery 100 is further provided, including the battery cell 20 according to any one of the foregoing embodiments.

According to some embodiments of the present application, a power consuming device is further provided, including the battery 100 according to any one of the foregoing embodiments, and the battery 100 is configured to supply electric energy. The power consuming device may be any one of the above apparatuses or systems using the battery.

According to a specific embodiment, the top cover assembly 20a includes the battery top cover 210 and the insulating member 220. The battery top cover 210 is provided with a plurality of mounting holes 212. Correspondingly, the insulating member 220 is provided with a plurality of hot melts 221 that may be respectively inserted into the mounting holes 212. The bottom wall 213 of each mounting hole 212 is provided with the first protrusion 216, the side wall 214 of the mounting hole 212 is provided with the annular second protrusion 217, and the recessed portion 218 is further provided on the side wall 214 between the second protrusion 217 and the bottom wall 213. The hot melt 221 is provided with the contact portion 2213 having the tip, which may contact with the first protrusion 216 to concentrate the ultrasonic energy, so that the hot melt 221 may be melted quickly and filled into the mounting hole 212.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be within the scope of the claims.

## Claims

1. A battery top cover (210), comprising:
a cover body (211); and
at least one mounting hole (212) formed on the cover body (211), wherein the mounting hole (212) is configured to receive a hot melt (221) of an insulating member (220), the mounting hole (212) has a bottom wall (213) and a side wall (214) connected to the bottom wall (213), an end of the side wall (214) away from the bottom wall (213) has an opening (215), and the bottom wall (213) is provided with a first protrusion (216) protruding toward the opening (215); and wherein a vertical distance between the bottom wall (213) and the opening (215) gradually increases from an inner side of the bottom wall (213) close to the first protrusion (216) to an outer side close to the side wall (214).

2. The battery top cover (210) according to claim 1, wherein the first protrusion (216) is spaced apart from the side wall (214).

3. The battery top cover (210) according to any one of claims 1-2, wherein the side wall (214) is further provided with a second protrusion (217), and a recessed portion (218) is provided between the second protrusion (217) and the bottom wall (213).

4. The battery top cover (210) according to claim 3, wherein the second protrusion (217) extends along a circumferential direction of the mounting hole (212) to form an annular structure.

5. The battery top cover (210) according to claim 3, wherein a plurality of second protrusions (217) are provided, the plurality of second protrusions (217) being arranged at intervals along a circumferential direction of the mounting hole (212).

6. The battery top cover (210) according to claim 3, wherein
the side wall (214) comprises a first wall surface (2141) and a second wall surface (2142) connected in sequence along an axial direction of the mounting hole (212), the bottom wall (213) is connected to an end of the first wall surface (2141) away from the second wall surface (2142), and a portion of the second wall surface (2142) protruding inwards from the first wall surface (2141) forms the second protrusion (217).

7. The battery top cover (210) according to claim 6, wherein the side wall (214) further comprises a third wall surface (2143) connected between the first wall surface (2141) and the second wall surface (2142), and taking a plane parallel to the cover body (211) as a cross-section, a cross-sectional area of an area enclosed by the third wall surface (2143) gradually increases from an end close to the second wall surface (2142) to an end away from the second wall surface (2142),
preferably
the second wall surface (2142) is a cylindrical surface;
or
the side wall (214) further comprises a fourth wall surface (2144) connected to an end of the second wall surface (2142) away from the first wall surface (2141), and the second wall surface (2142) further protrudes inwards from the fourth wall surface (2144).

8. The battery top cover (210) according to any one of claims 1-7, wherein a plurality of first protrusions (216) are provided, the plurality of first protrusions (216) being arranged at intervals on the bottom wall (213).

9. A top cover assembly (20a), comprising:
an insulating member (220), comprising a main body (222) and at least one hot melt (221) provided on the main body (222); and
a battery top cover (210) of any one of claims 1 to 8, wherein each hot melt (221) is inserted into one mounting hole (212) of the battery top cover (210), and the hot melt (221) is configured to be filled into the mounting hole (212) after hot melting (221).

10. The top cover assembly (20a) according to claim 9, wherein
a contact portion (2213) is provided at an end of the hot melt (221) away from the main body (222), and taking a plane parallel to the main body (222) as a cross-section, a cross-sectional area of the contact portion (2213) gradually decreases from an end close to the main body (222) to an end away from the main body (222) to form a tip.

11. The top cover assembly (20a) according to claim 10, wherein
the hot melt (221) comprises a first section (2211) and a second section (2212) connected in sequence along a direction away from the main body (222), a cross-sectional area of the first section (2211) is greater than a cross-sectional area of the second section (2212), and the contact portion (2213) is arranged at an end of the second section (2212) away from the first section (2211).

12. A battery cell (20), comprising: a top cover assembly (20a) of any one of claims 9-11.

13. A battery (100), comprising: a battery cell (20) of claim 12.

14. A power consuming device, comprising: a battery (100) of claim 13, the battery (100) being configured to supply electric energy.

## Patentansprüche

1. Obere Batterieabdeckung (210), umfassend:
einen Abdeckungskörper (211); und
mindestens ein Montageloch (212), das an dem Abdeckungskörper (211) gebildet ist, wobei das Montageloch (212) dazu ausgelegt ist, einen Schmelzklebstoff (221) eines Isolationselements (220) aufzunehmen, wobei das Montageloch (212) eine Bodenwand (213) und eine Seitenwand (214) aufweist, die mit der Bodenwand (213) verbunden ist, wobei ein von der Bodenwand (213) entferntes Ende der Seitenwand (214) eine Öffnung (215) aufweist und die Bodenwand (213) mit einem ersten Vorsprung (216) versehen ist, der in Richtung der Öffnung (215) vorsteht; und wobei sich ein vertikaler Abstand zwischen der Bodenwand (213) und der Öffnung (215) von einer Innenseite der Bodenwand (213) nahe dem ersten Vorsprung (216) zu einer Außenseite nahe der Seitenwand (214) allmählich erhöht.

2. Obere Batterieabdeckung (210) nach Anspruch 1, wobei der erste Vorsprung (216) von der Seitenwand (214) beabstandet ist.

3. Obere Batterieabdeckung (210) nach einem der Ansprüche 1-2, wobei die Seitenwand (214) ferner mit einem zweiten Vorsprung (217) versehen ist und ein vertiefter Abschnitt (218) zwischen dem zweiten Vorsprung (217) und der Bodenwand (213) bereitgestellt ist.

4. Obere Batterieabdeckung (210) nach Anspruch 3, wobei sich der zweite Vorsprung (217) entlang einer Umfangsrichtung des Montagelochs (212) so erstreckt, dass er eine ringförmige Struktur bildet.

5. Obere Batterieabdeckung (210) nach Anspruch 3, wobei mehrere zweite Vorsprünge (217) bereitgestellt sind, wobei die mehreren zweiten Vorsprünge (217) in Intervallen entlang einer Umfangsrichtung des Montagelochs (212) angeordnet sind.

6. Obere Batterieabdeckung (210) nach Anspruch 3, wobei
die Seitenwand (214) eine erste Wandfläche (2141) und eine zweite Wandfläche (2142) umfasst, die entlang einer axialen Richtung des Montagelochs (212) sequentiell verbunden sind, wobei die Bodenwand (213) mit einem von der zweiten Wandfläche (2142) entfernten Ende der ersten Wandfläche (2141) verbunden ist und ein von der ersten Wandfläche (2141) nach innen vorstehender Abschnitt der zweiten Wandfläche (2142) den zweiten Vorsprung (217) bildet.

7. Obere Batterieabdeckung (210) nach Anspruch 6, wobei die Seitenwand (214) ferner eine dritte Wandfläche (2143) umfasst, die zwischen der ersten Wandfläche (2141) und der zweiten Wandfläche (2142) verbunden ist, und, unter Annahme einer Ebene parallel zu dem Abdeckkörper (211) als Querschnitt, sich ein Querschnittsbereich eines von der dritten Wandfläche (2143) umschlossenen Bereichs von einem Ende nahe der zweiten Wandfläche (2142) zu einem von der zweiten Wandfläche (2142) entfernten Ende allmählich erhöht,
wobei vorzugsweise
die zweite Wandoberfläche (2142) eine zylindrische Oberfläche ist;
oder
die Seitenwand (214) ferner eine vierte Wandfläche (2144) umfasst, die mit einem von der ersten Wandfläche (2141) entfernten Ende der zweiten Wandfläche (2142) verbunden ist, und die zweite Wandfläche (2142) ferner von der vierten Wandfläche (2144) nach innen vorsteht.

8. Obere Batterieabdeckung (210) nach einem der Ansprüche 1-7, wobei mehrere erste Vorsprünge (216) bereitgestellt sind, wobei die mehreren ersten Vorsprünge (216) in Intervallen an der Bodenwand (213) angeordnet sind.

9. Obere Abdeckungsanordnung (20a), umfassend:
ein Isolationselement (220), das einen Hauptkörper (222) und mindestens einen Schmelzklebstoff (221) umfasst, der an dem Hauptkörper (222) bereitgestellt ist; und
eine obere Batterieabdeckung (210) nach einem der Ansprüche 1 bis 8, wobei jeder Schmelzklebstoff (221) in ein Montageloch (212) der oberen Batterieabdeckung (210) eingebracht ist und der Schmelzklebstoff (221) dazu ausgelegt ist, nach dem Heißschmelzen (221) in das Montageloch (212) gefüllt zu sein.

10. Obere Abdeckungsanordnung (20a) nach Anspruch 9, wobei
ein Kontaktabschnitt (2213) an einem von dem Hauptkörper (222) entfernten Ende des Schmelzklebstoffs (221) bereitgestellt ist und, unter Annahme einer Ebene parallel zu dem Hauptkörper (222) als Querschnitt, sich ein Querschnittsbereich des Kontaktabschnitts (2213) von einem Ende nahe dem Hauptkörper (222) zu einem von dem Hauptkörper (222) entfernten Ende allmählich verringert, so dass eine Spitze gebildet ist.

11. Obere Abdeckungsanordnung (20a) nach Anspruch 10, wobei
der Schmelzklebstoff (221) einen ersten Abschnitt (2211) und einen zweiten Abschnitt (2212) umfasst, die entlang einer Richtung von dem Hauptkörper (222) weg sequentiell verbunden sind, wobei ein Querschnittsbereich des ersten Abschnitts (2211) größer als ein Querschnittsbereich des zweiten Abschnitts (2212) ist und der Kontaktabschnitt (2213) an einem von dem ersten Abschnitt (2211) entfernten Ende des zweiten Abschnitts (2212) angeordnet ist.

12. Batteriezelle (20), umfassend: eine obere Abdeckungsanordnung (20a) nach einem der Ansprüche 9-11.

13. Batterie (100), umfassend: eine Batteriezelle (20) nach Anspruch 12.

14. Stromverbrauchsvorrichtung, umfassend: eine Batterie (100) nach Anspruch 13, wobei die Batterie (100) dazu ausgelegt ist, elektrische Energie zu liefern.

## Revendications

1. Couvercle supérieur de batterie (210), comprenant :
un corps de couvercle (211) ; et
au moins un trou de montage (212) formé sur le corps de couvercle (211), dans lequel le trou de montage (212) est configuré pour recevoir une partie thermofondue (221) d'un élément isolant (220), le trou de montage (212) a une paroi inférieure (213) et une paroi latérale (214) reliée à la paroi inférieure (213), une extrémité de la paroi latérale (214) éloignée de la paroi inférieure (213) a une ouverture (215), et la paroi inférieure (213) est pourvue d'une première saillie (216) faisant saillie vers l'ouverture (215) ; et dans lequel une distance verticale entre la paroi inférieure (213) et l'ouverture (215) augmente progressivement depuis un côté intérieur de la paroi inférieure (213) près de la première saillie (216) jusqu'à un côté extérieur près de la paroi latérale (214).

2. Couvercle supérieur de batterie (210) selon la revendication 1, dans lequel la première saillie (216) est espacée de la paroi latérale (214).

3. Couvercle supérieur de batterie (210) selon l'une quelconque des revendications 1 et 2, dans lequel la paroi latérale (214) est en outre pourvue d'une seconde saillie (217), et une portion évidée (218) est prévue entre la seconde saillie (217) et la paroi inférieure (213).

4. Couvercle supérieur de batterie (210) selon la revendication 3, dans lequel la seconde saillie (217) s'étend le long d'une direction circonférentielle du trou de montage (212) pour former une structure annulaire.

5. Couvercle supérieur de batterie (210) selon la revendication 3, dans lequel une pluralité de seconde saillies (217) sont prévues, la pluralité de seconde saillies (217) étant agencées à des intervalles le long d'une direction circonférentielle du trou de montage (212).

6. Couvercle supérieur de batterie (210) selon la revendication 3, dans lequel la paroi latérale (214) comprend une première surface de paroi (2141) et une deuxième surface de paroi (2142) reliées en séquence le long d'une direction axiale du trou de montage (212), la paroi inférieure (213) est reliée à une extrémité de la première surface de paroi (2141) éloignée de la deuxième surface de paroi (2142), et une portion de la deuxième surface de paroi (2142) faisant saillie vers l'intérieur à partir de la première surface de paroi (2141) forme la seconde saillie (217).

7. Couvercle supérieur de batterie (210) selon la revendication 6, dans lequel la paroi latérale (214) comprend en outre une troisième surface de paroi (2143) reliée entre la première surface de paroi (2141) et la deuxième surface de paroi (2142), et en utilisant un plan parallèle au corps de couvercle (211) en tant que section transversale, une superficie de section transversale d'une superficie entourée par la troisième surface de paroi (2143) augmente progressivement depuis une extrémité près de la deuxième surface de paroi (2142) jusqu'à une extrémité éloignée de la deuxième surface de paroi (2142),
de préférence
la deuxième surface de paroi (2142) est une surface cylindrique ;
ou
la paroi latérale (214) comprend en outre une quatrième surface de paroi (2144) reliée à une extrémité de la deuxième surface de paroi (2142) éloignée de la première surface de paroi (2141), et la deuxième surface de paroi (2142) fait en outre saillie vers l'intérieur à partir de la quatrième surface de paroi (2144).

8. Couvercle supérieur de batterie (210) selon l'une quelconque des revendications 1 à 7, dans lequel une pluralité de premières saillies (216) sont prévues, la pluralité de premières saillies (216) étant agencées à des intervalles sur la paroi inférieure (213).

9. Ensemble de couvercle supérieur (20a), comprenant :
un élément isolant (220), comprenant un corps principal (222) et au moins une partie thermofondue (221) prévue sur le corps principal (222) ; et
un couvercle supérieur de batterie (210) de l'une quelconque des revendications 1 à 8, dans lequel chaque partie thermofondue (221) est insérée dans un trou de montage (212) du couvercle supérieur de batterie (210), et la partie thermofondue (221) est configurée pour remplir le trou de montage (212) après thermofusion (221).

10. Ensemble de couvercle supérieur (20a) selon la revendication 9, dans lequel
une portion de contact (2213) est prévue à une extrémité de la partie thermofondue (221) éloignée du corps principal (222), et en utilisant un plan parallèle au corps principal (222) en tant que section transversale, une superficie de section transversale de la portion de contact (2213) diminue progressivement depuis une extrémité près du corps principal (222) jusqu'à une extrémité éloignée du corps principal (222) pour former une pointe.

11. Ensemble de couvercle supérieur (20a) selon la revendication 10, dans lequel
la partie thermofondue (221) comprend une première section (2211) et une seconde section (2212) reliée en séquence le long d'une direction éloignée du corps principal (222), une superficie de section transversale de la première section (2211) est supérieure à une superficie de section transversale de la seconde section (2212), et la portion de contact (2213) est agencée à une extrémité de la seconde section (2212) éloignée de la première section (2211).

12. Cellule de batterie (20), comprenant : un ensemble de couvercle supérieur (20a) de l'une quelconque des revendications 9 à 11.

13. Batterie (100), comprenant : une cellule de batterie (20) de la revendication 12.

14. Dispositif de consommation d'électricité, comprenant : une batterie (100) de la revendication 13, la batterie (100) étant configurée pour effectuer l'alimentation en énergie électrique.
